# EUROPEAN PATENT APPLICATION

(11) **EP 4 428 433 A1**
(43) Date of publication of application: **11.09.2024**
(21) Application number: 24161021.1
(22) Date of filing: 01.03.2024
(51) Int. Cl.: F21S 41/24, F21S 41/32, F21S 41/663, F21S 41/148, F21S 41/151

(54) **VEHICLE LIGHTING DEVICE, IN PARTICULAR FRONT LIGHTING DEVICE**

(30) Priority: 07.03.2023 CZ 20230093
(71) Applicant: PO LIGHTING CZECH s.r.o., 742 42 Senov u Nového Jicína (CZ)
(72) Inventor: FERBAS, Petr, 742 42 Senov u Nového Jicína (CZ); CHALLA, Kumar Tejaswi, 742 42 Senov u Nového Jicína (CZ); MARTOCH, Jan, 742 42 Senov u Nového Jicína (CZ)
(74) Representative: LLR

(57) **Abstract**

The invention relates to a lighting device for a vehicle, in particular a front lighting device, comprising a compact or narrow light guide (1) that is defined by its front side (15), rear side (14) and upper and lower sides (13), wherein the upper or lower side (13) is provided with at least one input element (10) of light beams (2) fitted with the input surface (100) of light beams (2) and a place (3) for the source (30) of light beams is arranged at a distance from the input surface (100) of the input element (10), wherein at the rear side (14), each input element (10) is provided with a redistribution element (11) adapted for a defined volume redirection of the light beams (2) from the input element (10) to the output surface (12). The redistribution element (11) has a focus (112) that is situated at a distance from the input surface (100) of the input element (10) that is greater than the distance of the placement (3) for the source (30) of light beams from the input surface (100) of the input element (10).

## Description

### TECHNICAL FIELD

This invention relates to a lighting device for a vehicle, in particular a front lighting device comprising a compact or narrow light guide that is defined by its front side, rear side, and upper and lower sides, wherein the upper or lower side is furnished with at least one light beam input element fitted with a light beam input surface, and a placement for a light beam source is arranged at a distance from the input surface of the input element, wherein at the rear side, each input element is provided with a redistribution element adapted for a defined volume redirection of the light beams from the input element to the output surface.

### BACKGROUND OF THE INVENTION

In lighting devices for vehicles that serve for various lighting functions, such as directional, fog, positioning, etc. lights, low-height light guides that users desire mainly for aesthetic reasons are seeing increasing use. With rising frequency, however, users also require that such light guides provide anti-dazzle and distance light functions, and it is difficult to achieve said functions through simple means and simple structures, because the lighting devices fulfilling these functions must have a particularly sharply cut edge ensuring proper lighting of the road in front of the vehicle while at the same time protecting the drivers of oncoming vehicles from any dazzling effect. Therefore, low-height lighting devices typically have a complex shape for their light guides or comprise additional parts and components so as to form a cut edge. Such devices are known e.g. from documents WO2022044078A1, US2022357009A1, and others. The light guides known from these solutions have a relatively complicated arrangement of their individual surfaces, which makes their production more expensive and leaves room for errors, especially during the installation of the device.

A specific problem then arises if a combined lighting device is to be created and is required to be low in height and at the same time fulfill various lighting functions. Either such devices are provided with a series of separate light-guiding units arranged side by side or on top of each other, designed to fulfill the individual respective lighting functions of the device as a whole, e.g. according to JP 6498474 B2 or DE10 2019 122 430 A1, or they have a complex arrangement with a plurality of reflecting and directing surfaces, potentially including profiling of the output surface of the light guide to form a cut edge, e.g. according to KR 2019 0081774 A and US10920947 B2, where the light sources are located in the focus of a reflecting surface that directs the light beams to the output surface and helps to form a cut edge.

Document CZ 308748 discloses alighting device, in particular for motor vehicles, comprising a body and a cover glass, wherein a reflecting block made of transparent material is provided in the body. The reflecting block comprises a longitudinal side comprising an input surface, a parabolic reflecting surface, and an output surface. The device further comprises a light source. The longitudinal side of its reflecting block is in the shape of a step with an upper surface and a lower surface, the upper surface being the input surface, and a vertical part between the upper and lower surfaces. The input surface includes a spherical recess centered at the focus of the parabolic reflecting surface, wherein a light source is arranged at the focus of the parabolic reflecting surface. Light beams emerging from the focus and passing through the surface of the spherical recess do not refract at this interface and continue in their original direction towards the parabolic reflecting surface of the block. Thus, there is no narrowing of the light beam entering the block. Furthermore, beams meeting the total-reflection condition are completely reflected on the parabolic reflecting surface towards the output surface of the reflecting block.

The disadvantage of the above-described devices is their complexity in terms of their surface arrangement and number of parts and/or of their manufacturing or assembly, which further increases as the required height of the output surface for a lighting device capable of also serving as a anti-dazzle/distance light with a sharply cut edge decreases. As the required height of the lighting device decreases, the possibility for producing a device that performs multiple lighting functions simultaneously is narrowed as well.

The purpose of the invention is to eliminate or at least minimize the disadvantages of the prior art, and in particular to design and create an optical system for a vehicle lighting device having a simple structure and low manufacturing demands, especially a low number of critical points in terms of manufacture and assembly while achieving a low-height output surface.

### SUMMARY OF THE INVENTION

The purpose of the invention is achieved by a vehicle lighting device, in particular a front lighting device, the essence of which is that the redistribution element has a focus that is situated at a distance from the input surface of the input element that is greater than the distance of the light source placement from the input surface of the input element.

The advantage of the invention is the possibility of creating a full-fledged vehicle lighting device with a very low light output height, even for use as anti-dazzle and distance lights, always without additional optical elements and without the use of a diffuser or other additional element for creating a cut edge. The light from the source is collected by an input element and directed to a redistribution element that effectively redistributes the light, including the creation of any required cut edge, to make it take on the shape of a low-height output surface. With the redistribution element having a focus whose position differs from the position of the radiating center of the light source, i.e. different from the emission, or reference, center of the light source, an increase in the relative distance of the redistribution element from the light source is achieved, allowing a sharper cut edge to be attained and also making it possible to concentrate light in the required parts of the output surface as necessary for the frontal lighting of the vehicle, i.e. for anti-dazzle and distance lights, even with a low output surface height, below 20 mm, as is the current trend in the vehicle market. The invention makes it possible to achieve the required light diffusion and intensity with a sharply cut edge and without the need for a diffuser, even for light guide output surface heights beneath 20 mm, e.g. down to a value of 5 mm.

Advantageous embodiments and features of the invention are set forth in the appended claims. The main advantage of the invention is that such an optical system for vehicle lighting has a simple design and low manufacturing demands, with only a few critical areas for fabrication and assembly, while achieving a low-height light guide output surface that reaches down even to 5-10 mm.

### EXPLANATION OF DRAWINGS

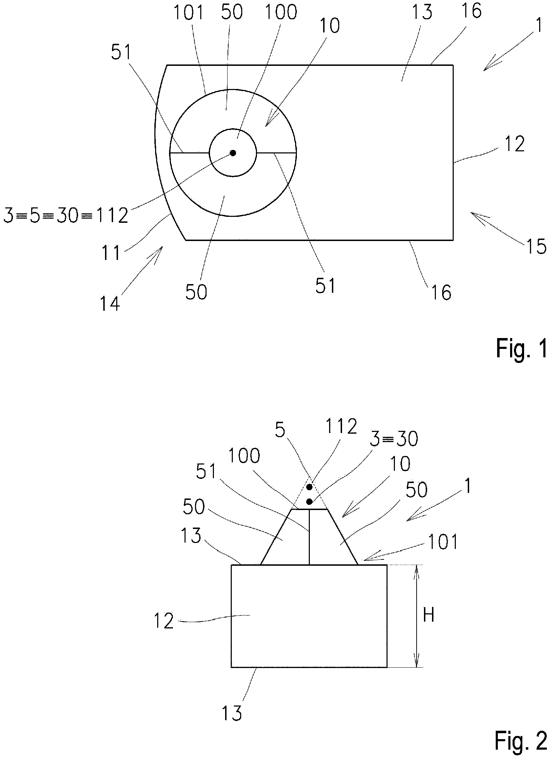

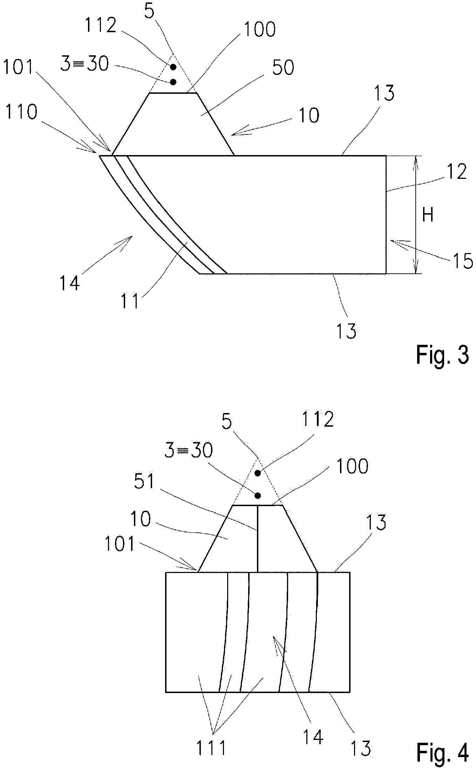

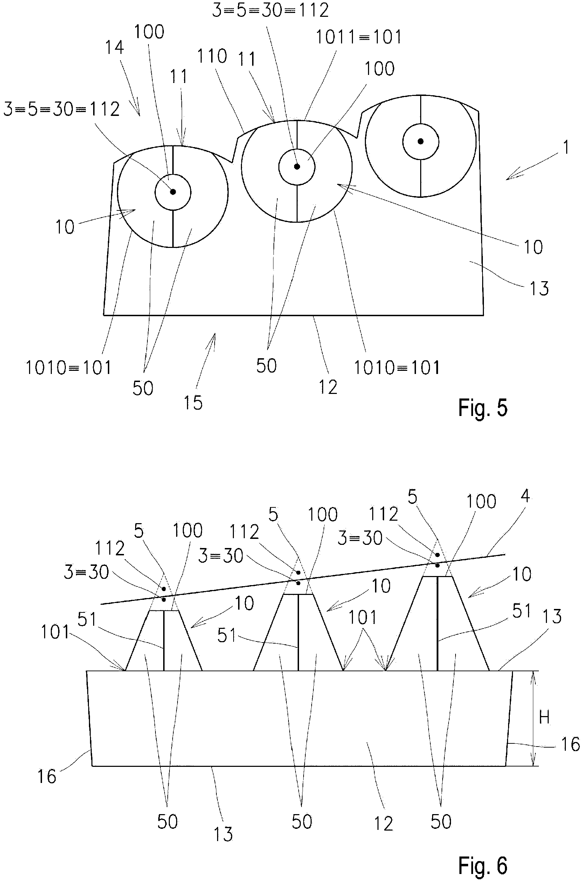

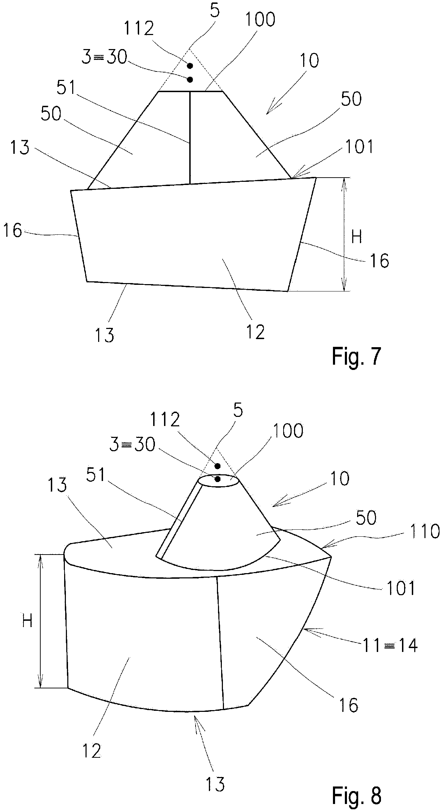

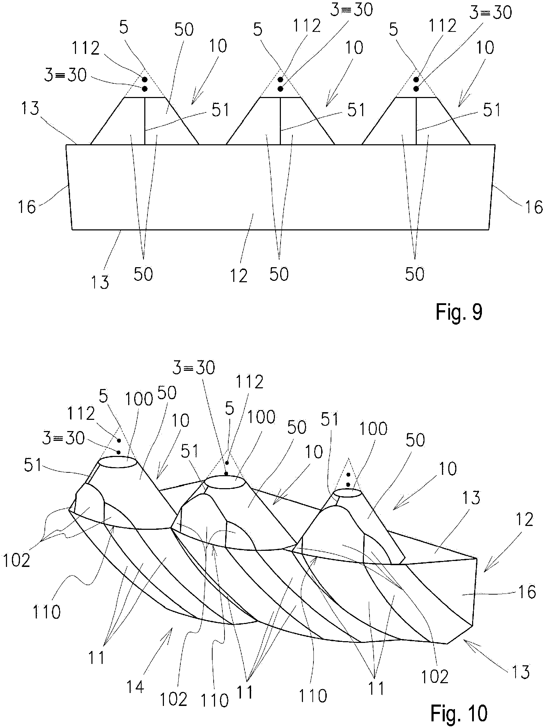

The invention is schematically illustrated in the drawings, where Fig. 1 shows a plan view of the first example of a light guide embodiment according to the invention, Fig. 2 shows a front view of the first example of a light guide embodiment according to the invention, Fig. 3 shows a side view of the first example of a light guide embodiment according to the invention, Fig. 4 shows a rear view of the first example of a light guide embodiment according to the invention, Fig. 5 shows a plan view of the second example of a light guide embodiment according to the invention, Fig. 6 shows a frontal view of the second example of a light guide embodiment according to the invention, Fig. 7 shows a frontal view of the third example of a light guide embodiment according to the invention, Fig. 8 shows a three-dimensional view of the fourth example of a light guide embodiment according to the invention, Fig. 9 shows a frontal view of the fifth example of a light guide embodiment according to the invention, and Fig. 10 shows a three-dimensional rear and side views of the fifth example of a light guide embodiment according to the invention of Fig. 9.

### EXAMPLES OF THE INVENTION EMBODIMENTS

The invention will be described by way of example of an embodiment of a vehicle lighting device, in particular the front lighting device, comprising a light guide 1 comprising, in turn, a compact or narrow body made of an optically suitable material.

The light guide 1 comprises at least one input element 10 of light beams 2, wherein each input element 10 is associated with a source 3 for the light beams 2. The light guide 1 further comprises at least one redistribution element 11 for the light beams 2 that is associated with the respective input element 11 and that is arranged in the direction of travel of the light beams 2 downstream of the input element 10. The light guide 1 further comprises an output surface 12 for the light beams 2 that is arranged in the direction of travel of the light beams 2 downstream of the redistribution elements 11. The input element 10 is arranged on the upper or lower side 13 of the light guide 1 body, the redistribution element 11 is arranged on the rear side 14 of the light guide 1 body, and the output surface 12 is arranged on the front side 15 of the light guide 1 body. The height H of the output surface 12, i.e. the height H of the surface 12 in the vertical direction when the lighting device is installed in the vehicle, ranges from 5 mm to 20 mm, or possibly greater, but its purpose is to achieve the lowest possible height H for the output surface 12 while also achieving the necessary light beam dispersion on the output surface 12 to fulfill the required lighting function, including the lighting function of anti-dazzle or distance lights.

The input element 10 comprises a directing body that is continuously connected by its lower side to the upper or lower side 13 of the light guide 1 body, and that tapers in the direction away from the upper or lower side 13 of the light guide 1 body and that is terminated by a planar input surface 100 for light beams 2 at a distance from the upper or lower side 13 of the light guide 1 body. The planar input surface 100 is substantially parallel to the upper or lower side 13 of the light guide 1 body in the illustrated example of embodiment. In the non-illustrated example of embodiment, the planar input surface 100 is inclined at an angle greater than 0° relative to the upper or lower side 13 of the light guide 1 body.

In the illustrated examples of embodiments, the input element 10 is formed by a body comprising two oppositely arranged halves of a truncated cone that are rotated relative to each other around the apex 5 of the cone by an angle ranging from 1° to 50°, but more preferably ranging from 1° to 30°, such that the conical surfaces 50 of the cone form mutually intersecting edges 51 that are situated in the direction from the rear side 14 of the light guide 1 body to the front side 15 of the light guide 1 body, and the input element 10 thus has a larger dimension in the direction from the rear side 14 of the light guide 1 body to the front side 15 of the light guide 1 body compared to its dimension in the direction of the distance of the sides 16 of the light guide 1 body.

In the examples of embodiment in Figures 1 to 4, the input element 10 adjoins the upper or lower side 13 of the light guide 1 body with its entire lower circumference 101. In the example of embodiment in Fig. 5, the input element 10 engages the upper or lower side 13 of the light guide 1 body via a front part 1010 of its lower circumference 101, wherein the rear part 1011 of its lower circumference 101 engages the upper end 110 of the redistribution element 11, or alternatively, the rear height of the input element 10 is beveled by at least one restriction surface 102 that engages the upper end 110 of the redistribution element 11 by its lower end, as shown in Fig. 10.

At a distance from the planar input surface 100 of the input element 10, a placement 30 is arranged above the input surface 100 of the input element 10 for the source 3 of light beams, for example a suitable LED that is connected to a power supply (not illustrated) and to a control circuit (not illustrated). The source 3 of light beams is for example arranged on a suitable PCB 4; see e.g. Fig. 6, which is housed in the lighting device structure and is assigned to the input element 10, or is assigned to the body of the light guide 1.

The input element 10 is adapted for directing the light beams 2 from the source 3 to the redistribution element 11 that is adapted for a defined volume redirection of the light beams 2 from the input element 10, i.e. from the source 3, to the output surface 12 of the light guide 1 body. In the illustrated examples of embodiments, the redistribution element 11 comprises at least two reflecting surfaces 111, wherein all of the reflecting surfaces 111 of one redistribution element 11 are adapted to synergistically define a volume redirection of the light beams 2 from the input element 10, i.e. from the source 3, onto the output surface 12 of the body of the light guide 1 into a planar distribution of the light beams 2 forming the desired light output pattern, possibly including a sharply cut edge for serving as an anti-dazzle and/or distance light. In a non-illustrated example of embodiment, the redistribution element 11 comprises at least one free-form reflecting surface 111 adapted to redirect the light beams 2 from the input element 10, i.e. the source 3, to the output surface 12 of the light guide 1 body in a defined planar distribution of the light beams 2 forming the desired light output pattern, optionally including a sharply cut edge for serving as an anti-dazzle and/or distance light.

The redistribution element 11 is formed such that it has a focus 112 that is situated above the input surface 100 of the input element 10 at a distance from the input surface 100 that is greater than the distance of the placement 30 for the source 3 of light beams from the input surface 100 of the input element 10.

The output surface 12, see Figs. 7 and 8, is rectangular, or non-rectangular, or square, or generally shaped, meanwhile being planar or curved or partly planar and partly curved. The output surface is either smooth or is structured or is smooth over a part of its surface and structured over a part of its surface; meanwhile the structuring of the output surface 12 is accomplished via suitable optical microstructures or optical elements.

The lateral sides 16 and/or the upper and/or lower sides 13 of the body of the light guide 1 are either smooth and/or are granular and/or are furnished with microstructures, being either planar or curved.

In the examples of embodiment in Figs. 5, 6, 9, and 10, the body of the light guide 1 is provided with a group of three of input elements 10, with each input element 10 being associated with one light source 3 of light beams 2 and one redistribution element 11, wherein the light guide 1 body comprises one output surface 12. The individual input elements 10 and their associated sources 3 of light beams 2 and the redistribution elements 11 are adapted to perform different lighting functions via a common output surface 12, e.g. in the examples of embodiment in Fig. 9 and 10 these are - parking light + static cornering - the left part in Fig. 9; fog light + corner light - the middle part in Fig. 9; anti-dazzle light + distance light - the right part in Fig. 9.

In the examples of embodiment in Figs. 5 and 6, the possible height variation of the input elements 10 and the associated possible angled arrangement of the PCB 4 with the sources 3 of light beams 2 are also illustrated.

In a non-illustrated embodiment of the invention, the body of the light guide 1 is provided with at least two input elements 10, wherein each input element 10 is associated with one source 3 of light beams 2 and one redistribution element 11, wherein the light guide 1 body comprises one output surface 12. Each individual assembly of input elements 10 and their associated sources 3 of light beams 2 and redistribution elements 11 is adapted to provide a single lighting function that is different from the lighting function of another such assembly within the same light guide 1, and that includes different light beam patterns via a common output surface 12 of a single compact or narrow (low) light guide 1, e.g. the Lb + Hb, LB + SBL lighting functions, etc., such that a device with a single compact or narrow (low) light guide 1 provides at least two different lighting functions. The number of integrated lighting functions is essentially determined by the number of assemblies of input elements 10, their associated sources 3 of light beams 2, and redistribution elements 11.

### INDUSTRIAL APPLICABILITY

This invention is applicable to the construction of vehicle lighting devices with a very low-height output surface for the light.

### List of References

- 1: light guide
- 10: input element
- 100: input surface
- 101: lower circumference
- 1010: front portion of the lower circumference
- 1011: rear portion of the lower circumference
- 102: restriction surface
- 11: redistribution element
- 110: upper end
- 111: reflecting surface
- 112: focus of the redistribution element
- 12: output surface
- 13: upper or lower side of the light guide body
- 14: rear side of the light guide body
- 15: front side of the light guide body
- 16: side of the light guide body
- 2: light beams
- 3: source of light beams
- 30: placement for the source of light beams
- 4: PCB
- 5: apex of the cone
- 50: conical surface
- 51: intersecting edge
- H: height of the output surface

## Claims

1. A lighting device of a vehicle, in particular a front lighting device comprising a compact or narrow light guide (1) defined by a front side (15), a rear side (14) and an upper and a lower side (13), wherein the upper or lower side (13) is provided with at least one input element (10) for light beams (2) provided with an input surface (100) for the light beams (2), and a placement (3) for a source (30) of light beams is arranged at a distance from the input surface (100) of the input element (10), wherein on the rear side (14), each input element (10) is associated with a redistribution element (11) adapted for a defined volume redirection of the light beams (2) from the input element (10) to the output surface (12), **characterized in that** the redistribution element (11) has a focus (112) that is situated at a distance from the input surface (100) of the input element (10) that is greater than the distance of the placement (3) for the source (30) of light beams from the input surface (100) of the input element (10).

2. The vehicle lighting device according to claim 1, **characterized in that** the redistribution element (11) has at least one reflecting surface (111) adapted to redirect the light beams (2) from the input element (10) to the output surface (12) in a defined volumetric way.

3. The vehicle lighting device according to claim 1 or 2, **characterized in that** the input element (10) is formed by a body comprising two oppositely arranged halves of a truncated cone that are rotated relative to each other around the apex (5) of the cone in a manner allowing the conical surfaces (50) of the cone to form mutually intersecting edges (51) that are situated in the direction from the rear side (14) of the flat body of the light guide (1) to the front side (15) of the flat body of the light guide (1).

4. The vehicle lighting device according to any one of claims 1 to 3, **characterized in that** the input element (10) is connected to the upper or lower side (13) of the flat body of the light guide (1) by its entire lower circumference (101).

5. The vehicle lighting device according to any one of claims 1 to 3, **characterized in that** the input element (10) engages the upper or lower side (13) of the flat body of the light guide (1) by the front portion (1010) of its lower circumference (101), wherein the input element (10) by the rear portion (1011) of its lower circumference (101) engages the upper end (110) of the redistribution element (11), and/or the rear portion of the height of the input element (10) is defined by at least one restriction surface (102) that engages by its lower end the upper end (110) of the redistribution element (11).

6. The vehicle lighting device according to any one of claims 1 to 5, **characterized in that** the output surface (12) has a height (H) in the range from 5 mm to 20 mm.

7. The vehicle lighting device according to any one of claims 1 to 6, **characterized in that** the light guide (1) is provided with at least two input elements (10), wherein each input element (10) is associated with a source (30) of light beams (2) and one redistribution element (11), wherein the light guide (1) comprises one common output surface (12), and wherein each individual row of the input element (10), the source (30) of light beams (2), and the redistribution element (11) is adapted to perform one lighting function that is different from the lighting function of another row and that comprises different light beam patterns via the common output surface (12) of one compact or narrow light guide (1).
